# EUROPEAN PATENT SPECIFICATION

(11) **EP 0 479 960 B1**
(45) Date of publication and mention of the grant of the patent: **18.10.1995**
(21) Application number: 91905856.0
(22) Date of filing: 06.03.1991
(51) Int. Cl.: C07F 9/38

(54) **METHOD FOR THE SYNTHESIS OF TRISODIUM PHOSPHONOFORMATE HEXAHYDRATE**
Verfahren zur Synthese von Trinatrium-Phosphonoformat-Hexahydrat
PROCEDE DE SYNTHESE DU HEXAHYDRATE DE TRISODIUM PHOSPHONOFORMATE

(30) Priority: 12.03.1990 GB 9005534
(43) Date of publication of application: 15.04.1992
(73) Proprietor: Astra Aktiebolag, 151 85 Södertälje (SE)
(72) Inventor: JAKUPOVIC, Edib, S-155 00 Nykvarn (SE); STENHEDE, Urban, S-151 50 Södertälje (SE)
(74) Representative: Hjertman, Ivan T.
(86) International application number: SE9100172
(87) International publication number: WO9113894

(56) References cited:
- EP-A- 0 241 686
- DD-A- 0 243 500
- US-A- 4 018 854
- CHEMICAL ABSTRACTS, Volume 110, No. 23, 5 June 1989, (Columbus, Ohio, US), see page 775, Abstract 213075e,& CS, B1, 253848 (V. ZIKAN et al.) 15 August 1988.

## Description

### Technical field

The present invention relates to a method for the synthesis of foscarnet, i.e. trisodium phosphonoformate hexahydrate.

### Prior Art

EP-A-241 686 discloses a process for the synthesis of alkali phosphonoformates comprising the steps of mixing trialkyl phosphonoformate and aqueous alkali hydroxide at a temperature between the freezing point of water and 40°C, optionally maintaining the reaction mixture at this temperature for a while, and then heating the reaction mixture to reflux in order to obtain complete saponification.

The product is then recovered by maintaining the reaction mixture at about 0°C for 24 hours, the crystals are separated off and are then recrystallized. The reported yield is 80 % to 86 %, and the purity 99,9 %.

However, it has been found that the water content, which should be 36 % in the dry product in hexahydrate form, varies when following the disclosed procedure.

### Summary of the invention

The object of the present invention is to provide a method for the synthesis of trisodium phosphonoformate hexahydrate.

This object is achieved according to the present invention which is characterized by the steps of adding sodium hydroxide to water, heating the aqueous sodium hydroxide solution to 50°C, adding triethyl phosphonoformate to said solution at 50°C, heating the reaction mixture to reflux temperature for about 1 hour, cooling of the reaction mixture to a temperature not lower than 17°C and filtering-off of the product.

According to one embodiment of the invention, the product is dissolved in water and is then recrystallized by cooling the solution to about 20°C giving trisodium phosphonoformate hexahydrate.

According to another embodiment of the invention, the product is dissolved in water and is then recrystallized by cooling the solution to about 5°C, resulting in the formation of trisodium phosphonoformate dodecahydrate, which is dried to give trisodium phosphonoformate hexahydrate.

### Disclosure of preferred embodiments

According to the invention, in a first step sodium hydroxide in concentrated form is mixed with water and the solution is heated to about 50°C. Then triethyl phosphonoformate is added to the solution at 50°C. The temperature of the reaction mixture is raised to reflux temperature, which is about 90 - 95°C, and ethanol formed is distilled off. After a suitable time at reflux temperature, which would be about 1 hour, the reaction mixture is cooled and the product is filtered off.

By cooling to a temperature of not lower than about 17°C, preferably not lower than 20°C, will result in the formation of trisodium phosphonoformate hexahydrate in wet state. The water content will thus be above 36 %, which is the water content of the dry product in pure form. Cooling to a temperature of above 20°C will lead to reduced yield. As a suitable upper limit, where adequate yield still is obtained may be mentioned 25°C to 30°C.

Cooling to aboout 5°C or below will result in the formation of trisodium phosphonoformate dodecahydrate. Upon drying of this compound under suitable conditions the product in dodecahydrate form will successively transform into the hexahydrate form. If the drying process is driven to far the product will successively transform into nonhydrated trisodium phosphonoformate.

Preferably the product obtained in the process according to the invention is recrystallized by dissolving it in water, heating the solution in order to obtain a clear solution, which then is cooled down to about 20°C in order to obtain the product in hexahydrate form or down to about 5°C in order to obtain the product in dodecahydrate form for subsequent drying.

The invention will now be illustrated by two working examples.

### Example 1

423 g (4.77 mol) of sodium hydroxide liquid conc. is added to 400 ml of water. The solution is heated to about 50°C and 167 g (0.795 mol) of triethyl phosphonoformate is added at this temperature. The reaction mixture is then heated to about 90°C and ethanol formed is distilled off. After about 1 hour at 90 - 95°C the reaction mixture is cooled to about 20°C and the product is filtered off. The yield of trisodium phosphonoformate hexahydrate wet is 248 g.

The wet substance is recrystallized in 570 ml of water by heating to 90°C in order to obtain a clear solution and then cooling to about 20°C. After filtration and washing with 50 ml of water at 18 - 22°C 187 g (74 % of theoretical yield) of trisodium phosphonoformate hexahydrate is obtained. This substance contains about 2 % free water, which can be eliminated by drying.

### Example 2

93.5 g trisodium phosphonoformate hexahydrate is dissolved in 335 ml of water by heating to 90°C to obtain a clear solution and is then cooled to about 5°C. After filtration 119 g of trisodium phosphonoformate dodecahydrate is obtained. Drying of this substance under suitable conditions will result in the formation of trisodium phosphonoformate hexahydrate.

## Claims

1. Method for the synthesis of foscarnet, i.e. trisodium phosphonoformate hexahydrate, characterized by the steps of adding sodium hydroxide to water, heating the aqueous sodium hydroxide solution to 50°C, adding triethyl phosphonoformate to said solution at 50°C, heating the reaction mixture to reflux temperature for about 1 hour, cooling of the reaction mixture to a temperature not lower than about 17°C and filtering off of the product giving trisodium phosphonoformate hexahydrate.

2. Method according to claim 1 characterized in that the product is dissolved in water and then recrystallized by cooling the solution to about 20°C giving trisodium phosphonoformate hexahydrate.

3. Method according to claim 1, characterized in that the product is dissolved in water and then recrystallized by cooling the solution to about 5 °C resulting in the formation of trisodium phosphonoformate dodecahydrate, which is dried to give trisodium phosphonoformate hexahydrate.

## Patentansprüche

1. Verfahren zur Synthese von Foscarnet, d.h. Trinatriumphosphonformiathexahydrat, gekennzeichnet durch die Schritte des Zusetzens von Natriumhydroxid zu Wasser, Erhitzen der wässerigen Natriumhydroxid-Lösung auf 50°C, Zusetzen von Triethylphosphonformiat zur genannten Lösung bei 50°C, Erhitzen der Reaktionsmischung auf Rückflußtemperatur während etwa 1 Stunde, Abkühlen der Reaktionsmischung auf eine Temperatur von nicht weniger als etwa 17°C und Abfiltrieren des Produkts, wobei Trinatriumphosphonformiat erhalten wird.

2. Verfahren nach Anspruch 1, dadurch gekennzeichnet, daß das Produkt in Wasser gelöst und dann durch Abkühlen der Lösung auf etwa 20°C umkristallisiert wird, wobei Trinatriumphosphonformiathexahydrat erhalten wird.

3. Verfahren nach Anspruch 1, dadurch gekennzeichnet, daß das Produkt in Wasser gelöst und dann durch Abkühlen der Lösung auf etwa 5°C umkristallisiert wird, was zur Bildung von Trinatriumphosphonformiatdodecahydrat führt, das getrocknet wird, wobei Trinatriumphosphonformiathexahydrat erhalten wird.

## Revendications

1. Procédé de synthèse du foscarnet, à savoir le phosphonoformiate trisodique hexahydraté, caractérisé par les étapes consistant à ajouter de l'hydroxyde de sodium à de l'eau, à chauffer la solution aqueuse d'hydroxyde de sodium à 50°C, à ajouter du phosphonoformiate de triéthyle à ladite solution à 50°C, à chauffer le mélange réactionnel à la température de reflux pendant environ 1 heure, à refroidir le mélange réactionnel à une température pas au-dessous d'environ 17°C et à retirer par filtration le produit, donnant le phosphonoformiate trisodique hexahydraté.

2. Procédé selon la revendication 1, caractérisé en ce que l'on dissout le produit dans de l'eau, puis on le recristallise en refroidissant la solution à environ 20°C, ce qui donne le phosphonoformiate trisodique hexahydraté.

3. Procédé selon la revendication 1, caractérisé en ce que l'on dissout le produit dans de l'eau et on le recristallise ensuite en refroidissant la solution à environ 5°C, aboutissant à la formation de phosphonoformiate trisodique dodécahydraté, que l'on sèche pour obtenir le phosphonoformiate trisodique hexahydraté.
